# DEMANDE DE BREVET EUROPEEN

(11) **EP 3 123 900 A1**
(43) Date de publication de la demande: **01.02.2017**
(21) Numéro de dépôt: 16182044.4
(22) Date de dépôt: 29.07.2016
(51) Int. Cl.: A47B 47/00, F16B 12/46

(54) **MEUBLE À ASSEMBLAGE SANS COLLE NI VIS**

(30) Priorité: 30.07.2015 FR 1557299
(71) Demandeur: Franck & Cie, 89460 Cravant (FR)
(72) Inventeur: Cohen-Solal, Frédéric, 75010 Paris (FR)
(74) Mandataire: Nony

(57) **Abrégé**

Meuble, comportant :
- des montants (20),
- des bagues d'assemblage (60,65),
- des éléments d'ossature (25,26),
les montants étant pourvus d'encoches (22,90) adaptées à recevoir les bagues (60,65), les éléments d'ossature présentant des fentes (28) leur permettant de s'engager sur les bagues reçues dans les encoches des montants pour bloquer les bagues sur les montants, les bagues reliant entre eux les éléments d'ossature et contribuant à les immobiliser relativement aux montants.

## Description

La présente invention concerne le mobilier et plus particulièrement mais non exclusivement les présentoirs utilisés dans les magasins pour offrir à la vente des articles aux consommateurs.

Ce type de mobilier doit se prêter à la réalisation de nombreuses variantes liées à la configuration du magasin ou à la nature des produits, et doit pouvoir être facilement assemblé ou démonté.

L'invention concerne plus particulièrement le mobilier comportant de nombreux éléments en bois.

Il existe un besoin pour bénéficier d'un mobilier capable de se monter sans colle ni vis, tout en étant esthétique, solide, et se prêtant à un grand nombre de réalisations différentes.

L'invention vise à répondre à ce besoin et elle y parvient grâce à un meuble, notamment présentoir, comportant :
- des montants,
- des bagues d'assemblage,
- des éléments d'ossature,
les montants étant pourvus d'encoches adaptées à recevoir les bagues, les éléments d'ossature présentant des fentes leur permettant de s'engager sur les bagues reçues dans les encoches des montants pour bloquer les bagues sur les montants, les bagues reliant entre eux les éléments d'ossature et contribuant à les immobiliser relativement aux montants.

L'invention permet un assemblage sans colle ni vis ou clous, grâce au maintien des différents éléments entre eux autour des bagues. L'assemblage du mobilier peut ainsi s'effectuer exclusivement sans colle ni vis.

De préférence, les bagues sont de forme carrée ou rectangulaire, et de préférence encore elles sont métalliques. Les montants sont quant à eux de préférence en bois, de même que les éléments d'ossature.

Les bagues présentent avantageusement, à l'arrière, des trous pour la fixation de tringles métalliques de rigidification du meuble, s'étendant entre les montants arrière.

Le meuble comporte de préférence des pieds formés par des bagues d'assemblage plus hautes que les autres. De préférence, les bagues, y compris les bagues de pied, présentent au moins une encoche d'équerrage disposée de façon à ce que le fond de cette encoche vienne en appui contre un bord de l'encoche du montant, de façon à améliorer l'équerrage de l'assemblage. De préférence, cette encoche d'équerrage est réalisée sur le bord supérieur de la bague, de façon à venir en appui contre le bord supérieur de l'encoche du montant.

De préférence, la bague comporte deux telles encoches d'équerrage, à l'opposé l'une de l'autre, pour permettre d'utiliser des bagues identiques pour les montants avant et arrière.

Le meuble selon l'invention peut comporter des panneaux d'extrémité, de façade ou arrière, ayant à leurs extrémités des extensions agencées pour s'engager entre les bagues et les montants.

De préférence, les montants présentent des rainures longitudinales dont la largeur correspond à l'épaisseur des éléments d'ossature. Ainsi, les éléments d'ossature peuvent s'engager dans les rainures et y rester bloqués grâce aux bagues.

Les montants comportent de préférence une pluralité de trous de réception de crochets d'étagères à différentes hauteurs.

Le meuble peut comporter des montants ayant une section en H ou en T.

Dans le cas d'une section en H, le montant peut définir des rainures longitudinales dans lesquelles se logent les éléments d'ossature maintenus par les bagues. Dans le cas d'une section en T, un élément d'ossature peut venir en appui entre la jambe et la tête du T.

Lorsqu'une pièce du meuble est assemblée au moyen de la bague, elle vient avantageusement en appui à la fois sur la bague et sur le montant.

Dans le cas où par exemple des panneaux verticaux sont montés, ceux-ci peuvent venir doubler les éléments d'ossature et s'engager avec ceux-ci entre les bagues et les montants ; un élément constitutif peut venir en appui sur un côté d'un montant et le panneau qui le double venir en appui sur ce même montant mais sur un autre côté, de préférence de façon à masquer les perforations du montant et obtenir ainsi un assemblage esthétique.

Le meuble peut comporter un plateau supérieur et/ou un plateau inférieur reposant sur les bagues entre les éléments d'ossature.

Les encoches s'étendent de préférence d'un seul côté des montants correspondants.

Le meuble peut également comporter des supports porte-produits, formés chacun d'une boucle en fil métallique, présentant un cadre ouvert sur un côté, et pourvu sur son côté ouvert de deux branches, le cadre présentant une élasticité suffisante afin de permettre d'écarter les branches afin de les engager dans un perçage d'un montant, le montant présentant des rainures longitudinales dans lesquelles s'engagent les branches, le cadre formant avec les branches un angle choisi de telle sorte que lorsque le support est en place, le cadre soit sensiblement horizontal, les branches s'étendant obliquement dans les rainures.

L'invention a encore pour objet un tel support porte-produit, considéré isolément, et indépendamment du meuble.

L'invention pourra être mieux comprise à la lecture de la description qui va suivre, d'exemples de mise en oeuvre non limitatifs de celle-ci, et à l'examen du dessin annexé, sur lequel :
- la figure 1 représente un meuble selon l'invention, à l'état monté, ainsi que ses différents éléments constitutifs, avant assemblage,
- les figures 2 et 3A illustrent l'assemblage d'éléments constitutifs,
- la figure 3B représente les éléments de la figure 3A après assemblage,
- la figure 4 représente isolément une bague d'assemblage,
- les figures 5A et 5B représentent isolément deux exemples de bagues de pied,
- la figure 6 illustre le montage d'un plateau supérieur,
- la figure 7 illustre le montage d'un élément constitutif formant panneau de signalisation,
- les figures 8A et 8B illustrent le montage d'une protection basse contre les chariots,
- les figures 9A et 9B illustrent le montage d'une table,
- les figures 10A et 10B illustrent le montage d'une variante de table,
- la figure 11 est une vue éclatée d'un présentoir,
- la figure 12 représente une variante de présentoir,
- les figures 13A à 13D représentent des exemples de boucles pouvant se fixer sur les montants,
- la figure 14 représente une variante de pied,
- la figure 15 représente en perspective un crochet de liaison,
- les figures 16A et 16B représentent le crochet de la figure 15 respectivement de face et de derrière, en place sur deux montants,
- les figures 17A à 17C représentent une gamme de bagues d'assemblage dont les dimensions sont liées,
- la figure 18 représente un exemple de crochet pour fond, et
- la figure 19 illustre le crochet en place.

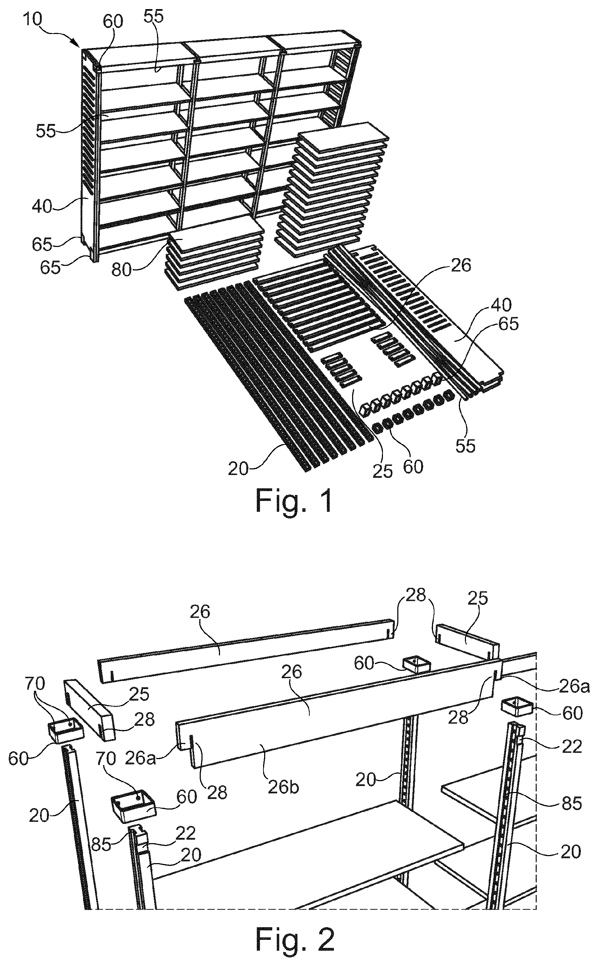

On a représenté sur la figure 1 un meuble 10 selon l'invention, constituant un présentoir, ainsi que tous ses éléments constitutifs avant assemblage.

Le meuble 10 comporte des montants 20, et des éléments d'ossature comprenant des éléments transversaux 25 et des éléments longitudinaux 26, plus longs que les éléments transversaux 25.

Dans l'exemple considéré, le meuble 10 comporte également des panneaux d'extrémité 40, encore appelés joues d'extrémité, ainsi que des tringles de rigidification 55.

L'assemblage de ces éléments s'effectue sans colle ni vis grâce à un ensemble de bagues 60, dont des bagues de pied 65.

Si l'on se reporte à la figure 2, on voit que les montants 20 présentent au moins une encoche 22 dont la hauteur correspond à la largeur d'une bague 60, et dont la profondeur est sensiblement égale à l'épaisseur de la bague.

Les éléments d'ossature 25 et 26 sont formés de planchettes de bois et présentent à proximité de leurs extrémités longitudinales des fentes 28 dont l'épaisseur correspond à celle d'une bague 60, de façon à pouvoir s'engager par-dessus sur celle-ci.

Dans le cas de l'un des éléments d'ossature 26, qui se trouve en façade, les fentes 28 peuvent être ménagées, comme illustré, entre une partie d'extrémité 26a et une partie principale 26b, plus haute que la partie d'extrémité 26a.

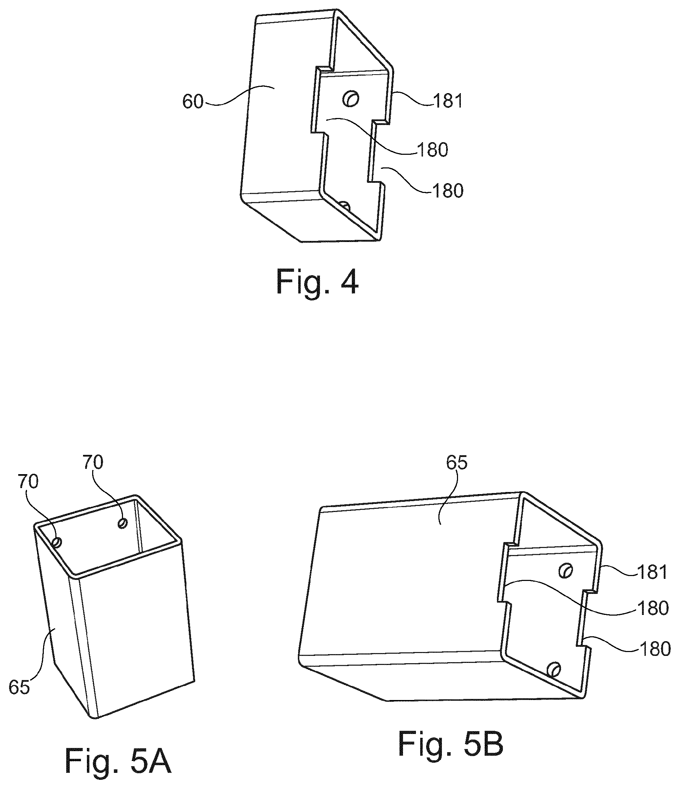

Chaque bague 60, y compris les bagues de pied 65, dont l'une d'elles est représentée isolément à la figure 5A, comporte dans l'exemple considéré deux trous 70 à l'arrière pour l'accrochage des tringles 55, lesquelles comportent en extrémité des portions coudées qui s'ajustent dans les trous 70.

Une tringle 55 relie la bague supérieure 60 d'un montant arrière à la bague de pied 65 du montant arrière adjacent, de sorte que les tringles 55 forment des croisillons, comme visible notamment sur la figure 1.

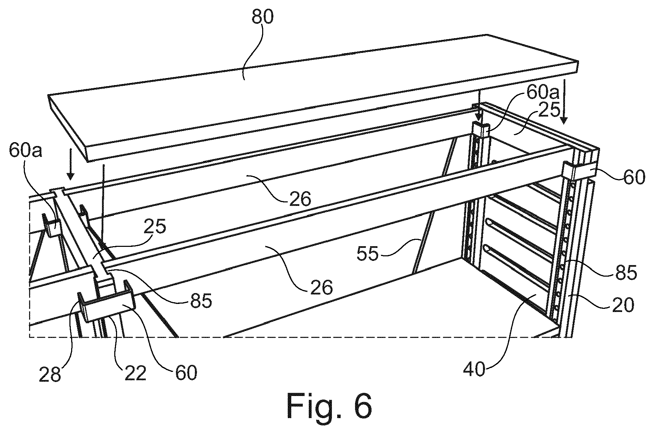

Des plateaux supérieurs 80 peuvent se poser simplement sur les bagues supérieures 60 comme illustré à la figure 6, venant en appui sur les portions 60a des bagues 60 qui s'étendent entre les éléments d'ossature 25 et 26.

Les positions des fentes 28 sur les éléments d'ossature 25 et 26, ainsi que la taille et la section des bagues 60, sont choisies de façon à ce que les éléments d'ossature 25 et 26 soient bloqués par les bagues 60 en appui contre les montants 20 et maintiennent les bagues 60 dans leurs encoches respectives 22.

Les montants 20 présentent des rainures longitudinales 85, qui leur confèrent une section transversale en forme générale de H, la largeur des rainures 85 correspondant à l'épaisseur des éléments d'ossature 25 et 26.

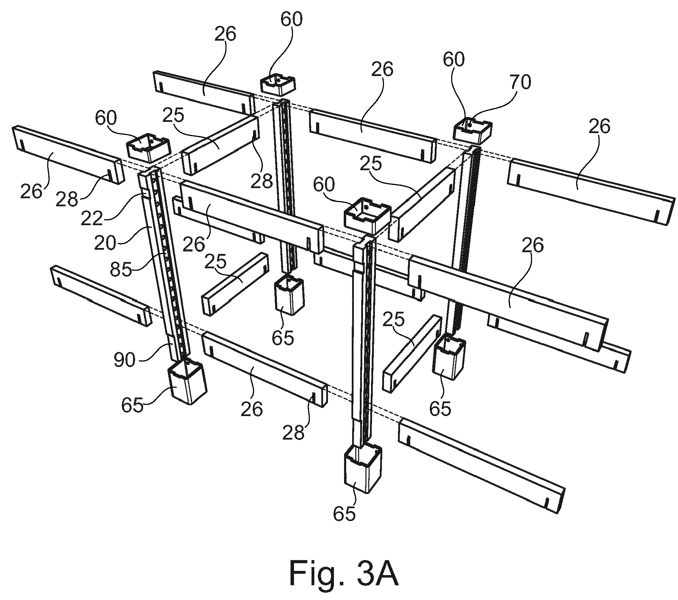

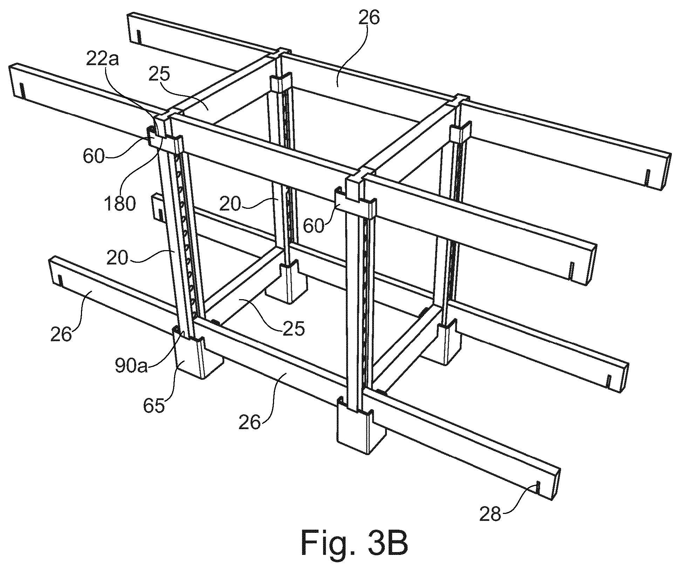

Comme on peut le voir plus particulièrement sur les figures 3A et 3B, les montants 20 présentent chacun en partie inférieure une encoche 90 qui débouche sur leur extrémité inférieure.

Dans l'exemple des figures 1 et 2, les bagues 60 et 65 sont réalisées avec une hauteur constante, qui correspond à celle des encoches 22 et 90 respectivement.

Dans l'exemple des figures 3A et 3B, les bagues 60 et 65 utilisées sont celles représentées isolément aux figures 4 et 5B, et présentent chacune deux encoches d'équerrage 180 opposées. Ces encoches 180 sont réalisées sur le bord supérieur 181 des bagues, et le fond des encoches 180 vient en appui contre le bord supérieur 22a ou 90a des encoches 22 et 90, comme visible sur la figure 3B. Dans une variante, les bagues sont réalisées sans de telles encoches.

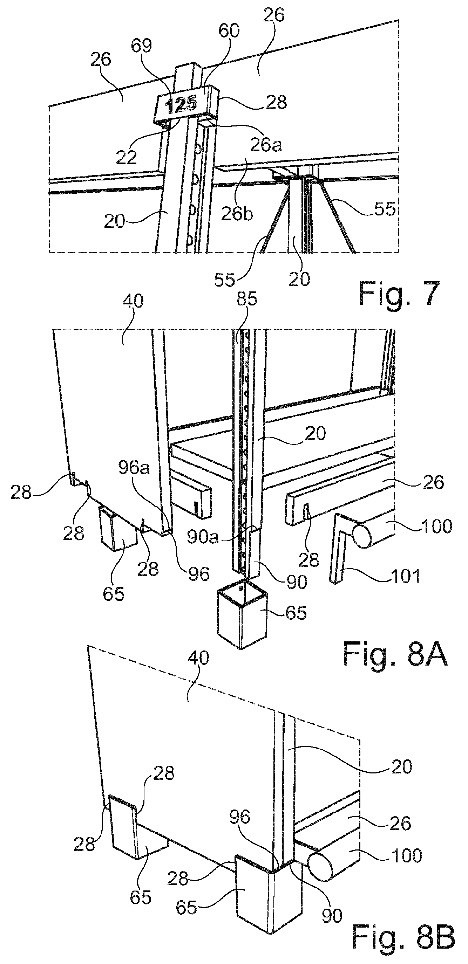

Les panneaux d'extrémité 40 peuvent comporter des fentes 28 pour s'engager sur les bagues de pied 65, comme illustré aux figures 8A et 8B. Sur son côté avant, le panneau d'extrémité 40 présente une encoche 96, ayant même profondeur que l'encoche 90 du montant 20.

Les bords supérieurs 90a et 96a des encoches 90 et 96 se positionnent au même niveau, comme illustré sur la figure 8B, et le panneau 40 se positionne entre le flanc extérieur de la bague 65 et le montant 20, procurant un montage esthétique.

On voit sur les figures 8A et 8B que des accessoires peuvent être assemblés également grâce aux bagues 60 ou 65, tels qu'une barre de protection basse 100 vis-à-vis des chariots de supermarché.

Cette barre 100 porte à ses extrémités des crochets 101 agencés pour se loger chacun dans une bague 65 et s'y trouver bloquée en position grâce aux autres éléments engagés dans celle-ci.

Sur la figure 7, on voit que les éléments d'ossature longitudinaux 26 peuvent servir de panneaux de signalisation.

Les bagues 60 peuvent porter des inscriptions 69.

Les montants 20 sont perforés pour le montage de crochets de maintien d'étagères, connus en eux-mêmes et non représentés.

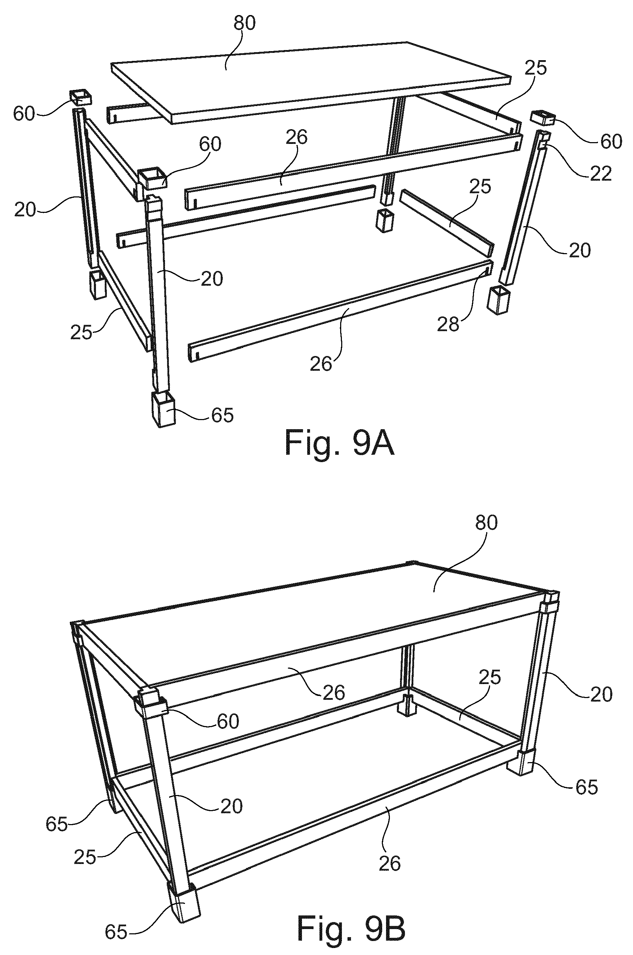

Sur les figures 9A et 9B on a représenté un meuble selon l'invention, constituant une table.

Les montants 20 présentent une section dans cet exemple qui n'est plus en H mais en T.

Les éléments d'ossature transversaux 25 viennent en appui contre la base du T tandis que les éléments longitudinaux 26 s'engagent dans l'angle formé entre la jambe du T et la tête du T. Le plateau supérieur repose sur les bagues 60, entre les éléments d'ossature supérieurs.

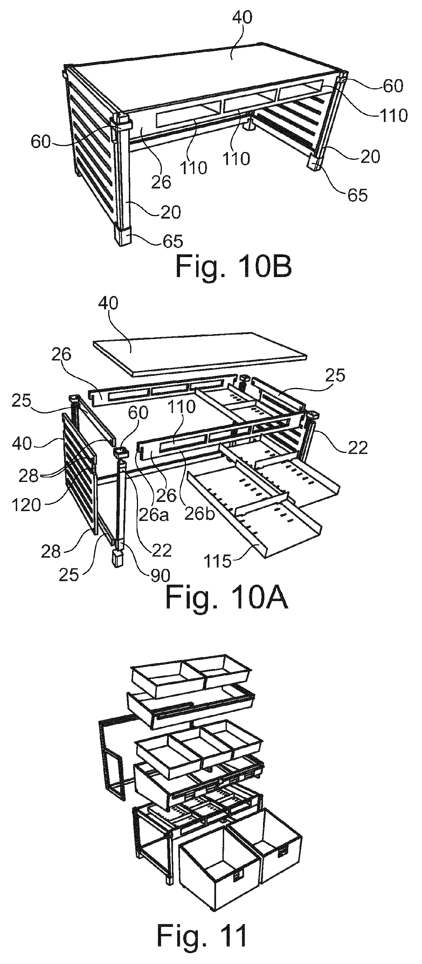

Les figures 10A et 10B représentent une variante de table.

Dans cet exemple, les éléments d'ossature longitudinaux 26 présentent des ouvertures 110 pour le passage de tiroirs 115.

Les éléments d'ossature transversaux 25 sont doublés de panneaux d'extrémité 40, pourvus de fentes 28 en parties supérieure et inférieure pour s'engager sur les bagues supérieures 60 et les bagues de pied 65, respectivement. Les fentes 28 sont réalisées en partie supérieure au-dessus d'encoches 120 permettant le passage des bagues 60 lors du montage.

Le meuble des figures 10A et 10B peut recevoir en lieu et place du plateau supérieur 40 et des panneaux d'extrémité divers accessoires, comme illustré à la figure 11, pour former un présentoir de fruits et légumes.

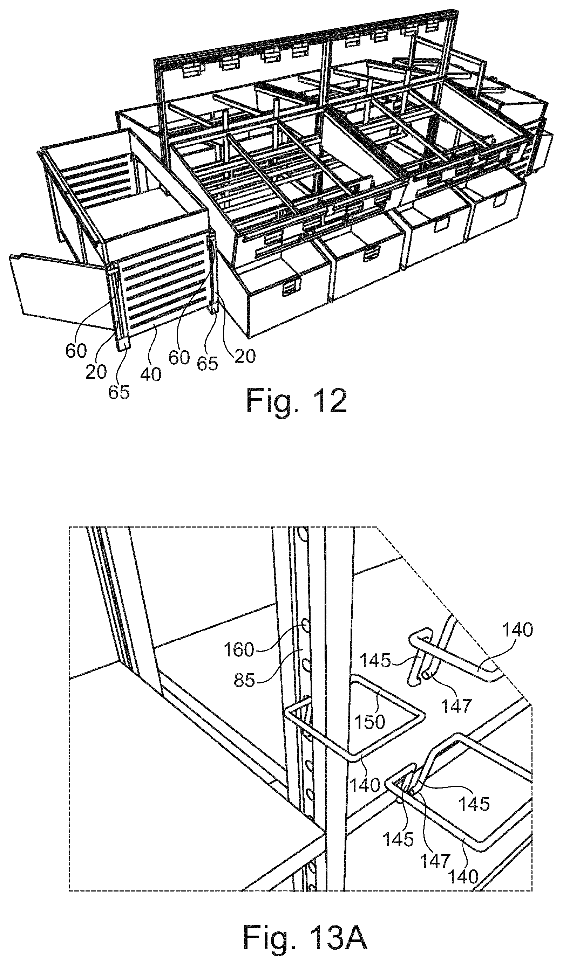

On peut assembler entre eux plusieurs meubles selon l'invention, comme illustré à la figure 12, pour constituer par exemple un îlot de présentation d'articles tels que des fruits et légumes.

On a représenté à la figure 13A des supports porte-produits formés de boucles 140 en fil métallique, agencés pour se fixer sur les montants 20.

Ces boucles 140 présentent un cadre carré ou rectangulaire 150, ouvert sur un côté, et pourvu sur son côté ouvert de deux branches 145, le cadre présentant une élasticité suffisante pour permettre d'écarter les branches 145 afin de les engager dans un perçage 160 d'un montant 20.

Les branches 145 présentent des crochets d'extrémité 147, qui s'étendent l'un vers l'autre, et qui sont obtenus par pliage à 90° de l'extrémité des branches 145.

Lorsque les boucles 140 sont en place, les branches 145 sont engagées obliquement dans les rainures 85, ce qui maintient le cadre 150 sensiblement à l'horizontale, comme illustré.

Ces boucles 140 peuvent servir au maintien de divers produits sur les montants.

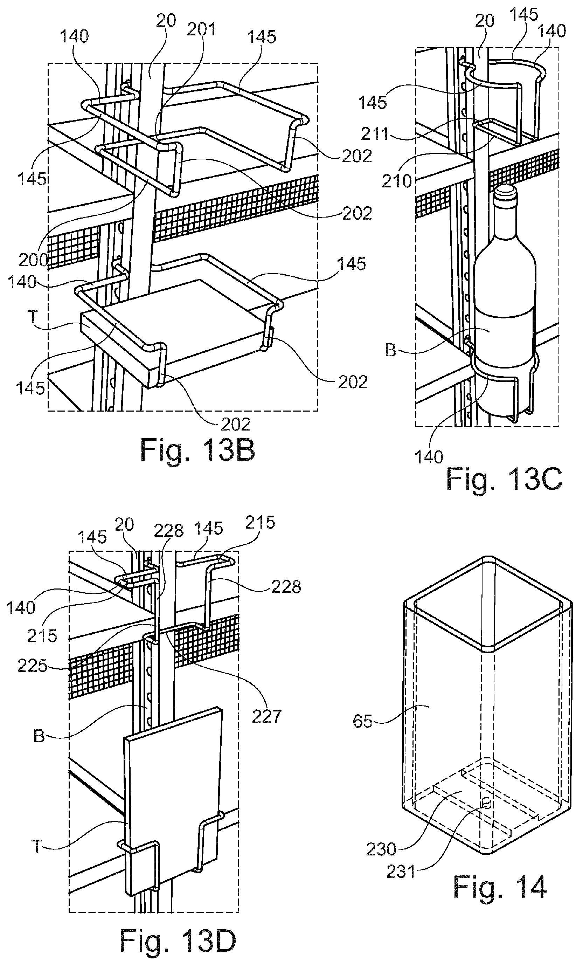

On a représenté sur les figures 13B à 13D des variantes de boucles 140.

Dans la variante de la figure 13B, les deux branches 145 sont reliées par une partie 200 qui forme un cadre prend appui par un côté 201 contre le montant dans lequel sont engagées les branches.

Le cadre 200 définit une surface sur laquelle peut reposer une tablette T, laquelle est de dimension choisie pour être retenue à l'arrière par le montant 20 et à l'avant par les portions 202 sensiblement verticales reliant les branches 145 au cadre 200. La tablette peut être remplacée par tout objet de forme adaptée.

La variante de la figure 13C est destinée au maintien d'une bouteille B. Les branches 145 présentent une forme arquée, et sont prolongées à leur extrémité opposée au montant 20 par un cadre formant équerre 210, dont un côté 211 prend appui contre le montant 20.

La variante de la figure 13D est destinée à recevoir une tablette T tenue verticalement.

Les branches 145 forment deux gorges opposées 215 dans lesquelles se loge la tablette. Une cadre 225 prolonge vers le bas les branches 145, ce cadre présentant deux portions 228 sensiblement parallèles et verticales, reliées inférieurement par un retour vers l'arrière 227 prenant appui sur le montant 20.

On a représenté à la figure 14 une variante de pied 65 qui comporte inférieurement une plaque 230 reliant deux côtés opposés. Cette plaque est traversée en son centre par un taraudage dans lequel est vissée une vis non représentée, afin de constituer un pied de hauteur réglable.

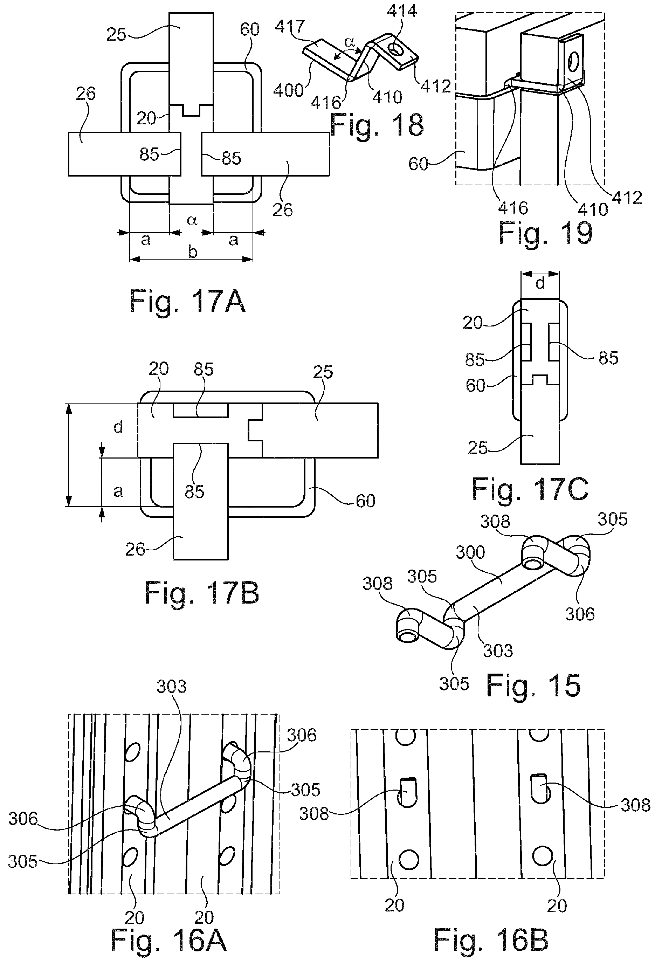

On a représenté à la figure 15 un crochet filaire 300 qui sert à relier deux montants 20 disposés côté-à-côte, comme illustré sur les figures 16A et 16B. Il peut s'agir de meubles disposés dos à dos.

Le crochet 15 comporte une portion centrale 303, rectiligne, qui se raccordent à deux coudes 305 à angle droit dirigés vers le haut, eux-mêmes prolongés par deux coudes 306 à angle droit vers l'arrière. Les extrémités du crochet sont pourvues de coudes 308 à angle droit dirigés vers le haut.

Le crochet 300 est mis en place en introduisant les extrémités coudées dans les trous des montants 20, comme illustré à la figure 16A. La portion centrale 303 prend appui sur les montants 20. Les coudes 308 retiennent le crochet 300 sur les montants 20.

On peut choisir les dimensions des bagues d'assemblage 60 en fonction de la distance *a* qui sépare l'extrémité d'un élément d'ossature 25 ou 26 de la fente 28 correspondante, comme illustré aux figures 17A à 17C. Sur ces figures, on a représenté trois bagues d'assemblage 60 dont l'écartement entre deux côtés opposés est de la forme d+ n.a, où d est la largeur d'un montant 20 et n un nombre entier.

Dans l'exemple de la figure 17A, on voit que la distance entre deux côtés opposés de la bague d'assemblage vaut d + 2.a, dans l'exemple de la figure 17B d+a et dans l'exemple de la figure 17 d seulement.

On peut utiliser pour tenir une plaque de fond des crochets 400 tels qu'illustré aux figures 18 et 19.

Ces crochets comportent une partie 410 coudée à angle droit, qui se raccorde à une partie coudée 416 dans la direction opposée avec un angle alpha obtus, de 110° dans l'exemple considéré.

Les crochets 400 peuvent être formés par pliage d'un plat métallique. Un trou 414 peut être prévu sur la branche extérieure 412 de la partie coudée 410.

La partie 410 coudée à angle droit peut s'engager dans une fente correspondante du fond, comme illustré à la figure 19 ; la branche extérieure 417 de la partie coudée 416 peut s'engager sous la bague d'assemblage ; l'angle alpha obtus participe au maintien sous la bague d'assemblage.

L'invention n'est pas limitée aux exemples qui viennent d'être décrits.

Ainsi, d'autres meubles peuvent être réalisés en conservant le principe d'assemblage décrit ci-dessus.

## Revendications

1. Meuble (10), notamment présentoir, comportant :
- des montants (20),
- des bagues d'assemblage (60,65),
- des éléments d'ossature (25,26),
les montants étant pourvus d'encoches (22,90) adaptées à recevoir les bagues (60,65), les éléments d'ossature présentant des fentes (28) leur permettant de s'engager sur les bagues reçues dans les encoches des montants pour bloquer les bagues sur les montants, les bagues reliant entre eux les éléments d'ossature et contribuant à les immobiliser relativement aux montants.

2. Meuble selon la revendication 1, les bagues (60,65) étant de forme carrée ou rectangulaire.

3. Meuble selon l'une quelconque des revendications 1 à 3, les montants (20) étant en bois et/ou les éléments d'ossature (25,26) étant en bois.

4. Meuble selon l'une quelconque des revendications précédentes, les bagues (60,65) présentant à l'arrière des trous (70) pour la fixation de tringles métalliques (55) de rigidification du meuble, s'étendant entre les montants arrière (20).

5. Meuble selon l'une quelconque des revendications précédentes, les bagues présentant au moins une encoche d'équerrage (180) disposée de façon à venir en appui contre un bord (22a, 90a) de l'encoche (22,90) du montant, de préférence son bord supérieur, les bagues présentant deux encoches d'équerrage (180) opposées.

6. Meuble selon l'une quelconque des revendications précédentes, comportant des pieds (65) formés par des bagues d'assemblage plus hautes que les autres.

7. Meuble selon l'une quelconque des revendications précédentes, comportant des panneaux (40) d'extrémité, de façade ou arrière, ayant à leurs extrémités des extensions (26a) agencées pour s'engager entre les bagues et les montants.

8. Meuble selon l'une quelconque des revendications précédentes, les montants comportant une pluralité de trous (160) de réception de crochets d'étagères ou de supports porte-produits à différentes hauteurs.

9. Meuble selon l'une quelconque des revendications précédentes, les montants (20) présentent des rainures longitudinales (85) dont la largeur correspond à l'épaisseur des éléments d'ossature (25,26).

10. Meuble selon l'une quelconque des revendications précédentes, comportant des montants (20) ayant une section en H ou en T.

11. Meuble selon l'une quelconque des revendications précédentes, comportant un plateau supérieur (80) reposant sur les bagues (60) entre les éléments d'ossature (25,26).

12. Meuble selon l'une quelconque des revendications précédentes, les encoches (22,90) s'étendant sur un seul côté des montants correspondants (20).

13. Meuble selon l'une quelconque des revendications précédentes, comportant un ou plusieurs supports porte-produits, formés chacun d'une boucle (140) en fil métallique, présentant un cadre ouvert sur un côté, et pourvu sur son côté ouvert de deux branches (145), le cadre présentant une élasticité suffisante afin de permettre d'écarter les branches (145) afin de les engager dans un perçage (160) d'un montant, le montant présentant des rainures longitudinales (85) dans lesquelles s'engagent les branches (145), le cadre étant configuré pour prendre appui sur le montant lorsque le support est en place 19.
